# FASCICULE DE BREVET EUROPEEN

(11) **EP 3 370 317 B1**
(45) Date de publication et mention de la délivrance du brevet: **22.05.2019**
(21) Numéro de dépôt: 17305229.1
(22) Date de dépôt: 03.03.2017
(51) Int. Cl.: H02G 15/34

(54) **EXTRÉMITÉ DE CÂBLE SUPRACONDUCTEUR**
ENDE EINES SUPRALEITERKABELS
SUPERCONDUCTING CABLE END

(43) Date de publication de la demande: 05.09.2018
(73) Titulaire: Nexans, 92400 Courbevoie (FR)
(72) Inventeur: LALLOUET, Nicolas, 62132 Fiennes (FR); DELPLACE, Sébastien, 59279 Loon-Plage (FR)
(74) Mandataire: Lenne, Laurence

(56) Documents cités:
- EP-A1- 2 383 854
- FR-A1- 2 202 387
- JP-A- 2002 280 628
- JP-A- 2016 195 486

## Description

L'invention concerne une extrémité de câble supraconducteur.

Le document de brevet EP 2 685 469 décrit un agencement comprenant un câble supraconducteur et un premier cryostat entourant ce dernier pour le passage d'un premier moyen de refroidissement, de préférence de l'hélium gazeux. Ce premier cryostat est constitué de deux tubes métalliques coaxiaux et espacés, entre lesquels est disposé un matériau d'isolation thermique, de préférence du vide, et présente sur toute sa longueur un espace dans lequel est disposé le câble et dans lequel circule en fonctionnement le premier moyen de refroidissement.

Autour de ce premier cryostat est formé un second cryostat coaxial et espacé du premier, pour le passage d'un second moyen de refroidissement, de préférence de l'azote liquide. Ce second cryostat est également conformé de deux tubes métalliques coaxiaux et espacés, entre lesquels est disposé un matériau d'isolation thermique, de préférence du vide, et présente sur toute sa longueur un espace dans lequel circule en fonctionnement le second moyen de refroidissement.

Le premier cryostat comporte sur sa face externe une couche diélectrique, qui peut être en papier ou en papier revêtu de matière plastique, éventuellement revêtue d'un écran supraconducteur.

L'invention a pour objet une extrémité pour un tel agencement de câble supraconducteur à double cryostat, assurant la gestion d'une haute tension et d'un fort courant et permettant un raccordement au réseau électrique.

Plus précisément l'invention concerne une extrémité d'un agencement comprenant un câble supraconducteur, un premier cryostat entourant ce dernier pour le passage d'un premier moyen de refroidissement et un second cryostat disposé autour de ce premier cryostat pour le passage d'un second moyen de refroidissement, chaque dit cryostat étant conformé de deux tubes métalliques coaxiaux et espacés, entre lesquels est disposé un matériau d'isolation thermique, le premier cryostat comportant sur sa face externe une couche diélectrique, revêtue d'un écran, extrémité caractérisée en ce qu'elle comporte une enceinte prolongeant ledit second cryostat et comportant deux parois entre lesquelles est disposé un matériau d'isolation thermique, un agencement de déflexion de la tension disposé sur ladite couche diélectrique dans ledit second matériau de refroidissement contenu par ladite enceinte et connecté à une extrémité dudit écran et un conducteur de courant hybride comportant un élément supraconducteur connecté à une extrémité dudit câble supraconducteur et à un élément conducteur résistif sortant de ladite enceinte.

De préférence, l'agencement de déflexion de la tension est un cône de contrainte, avantageusement en papier.

Il peut également être un cône condensateur.

Avantageusement, ledit élément supraconducteur est disposé dans une première enveloppe cryogénique.

De préférence, ladite première enveloppe cryogénique prolonge le tube externe dudit premier cryostat et contient ledit matériau d'isolation thermique de ce dernier.

Cette première enveloppe cryogénique peut également être indépendante du premier cryostat.

De préférence, ladite extrémité dudit câble supraconducteur est disposée dans une seconde enveloppe cryogénique disposée à l'intérieur de ladite première enveloppe cryogénique, prolongeant le tube interne dudit premier cryostat et contenant ledit premier moyen de refroidissement.

Ledit premier matériau de refroidissement peut être de l'hélium gazeux.

Ledit second matériau de refroidissement peut être de l'azote liquide.

Lesdits matériaux d'isolation thermique peuvent du vide ou une mousse isolante thermiquement.

L'invention est décrite ci-après plus en détail à l'aide d'une figure représentant un mode de réalisation préféré.

Cette figure est vue en coupe longitudinale d'une extrémité conforme à l'invention.

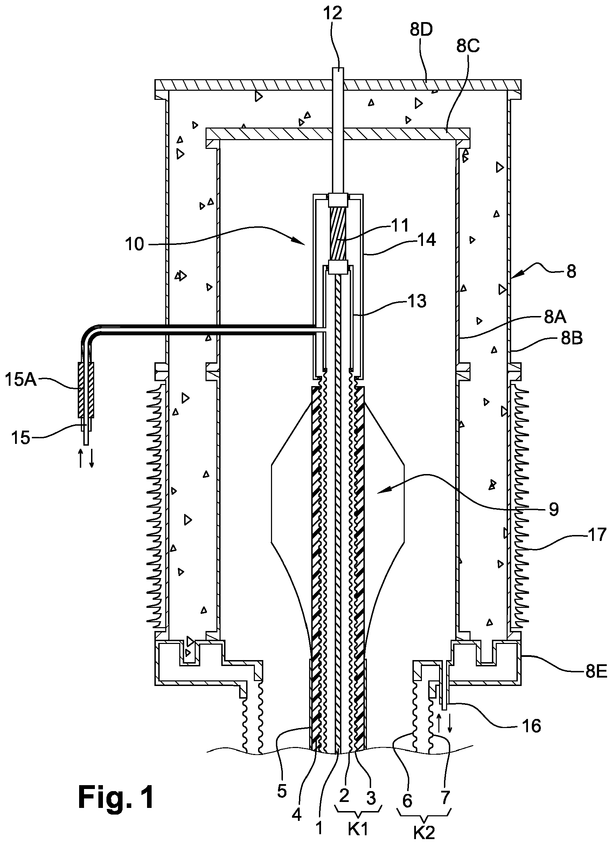

Comme illustré sur la figure, un agencement de câble comprend un câble supraconducteur 1, de préférence en diborure de magnésium (MgB2), un premier cryostat K1 entourant ce dernier pour le passage d'un premier moyen de refroidissement, de préférence de l'hélium gazeux à 20°K, et un second cryostat K2 disposé autour de ce premier cryostat pour le passage d'un second moyen de refroidissement, de préférence de l'azote liquide à 77°K.

Le premier cryostat K1 est conformé de deux tubes métalliques 2, 3 ondulés, coaxiaux et espacés, entre lesquels est disposé un matériau d'isolation thermique, qui est du vide ou une mousse isolante thermiquement. Ce premier cryostat K1 comporte sur sa face externe une couche diélectrique 4, de préférence en papier, revêtue d'un écran supraconducteur 5. Cet écran 5 peut également être en matériau conducteur résistif selon la constitution du câble 1.

Le second cryostat K2 est conformé de deux tubes métalliques 6, 7 ondulés, coaxiaux et espacés, entre lesquels est disposé un matériau d'isolation thermique, qui est du vide et/ou une mousse isolante thermiquement.

L'extrémité comporte une enceinte 8 prolongeant le second cryostat et comportant deux parois 8A, 8B, 8C, 8D de préférence métalliques, entre lesquelles est disposé un matériau d'isolation thermique, qui est du vide ou une mousse isolante thermiquement. Pour ce faire, l'extrémité comporte une pièce de cryostat intermédiaire 8E, de préférence en acier inoxydable, qui assure la continuation d'isolation thermique entre le second cryostat de l'agencement de câble et cette enceinte 8 et qui supporte les composants de l'extrémité.

L'écran 5 de l'agencement du câble, relié à la terre, est interrompu à proximité de cette pièce de cryostat intermédiaire 8A, également reliée à la terre.

L'extrémité comporte un agencement de déflexion de la tension 9 disposé dans le second matériau de refroidissement contenu par l'enceinte 8 et connecté à l'extrémité de l'écran 5 sur la couche diélectrique 4, afin de gérer le champ électrique entre la terre et la haute tension présente dans l'extrémité.

De préférence, cet agencement de gestion de la haute tension est un cône de contrainte en papier.

La paroi externe 8B de l'enceinte 8 est recouvert d'une partie diélectrique à ailettes 17 à sa partie en vis-à-vis du cône de contrainte 9.

A proximité de l'extrémité de ce cône de contrainte 9, la couche diélectrique 4 est interrompue et un agencement de gestion du courant 10 est disposé à cette extrémité de la couche diélectrique 4.

Cet agencement de gestion du fort courant comporte un conducteur de courant hybride comportant un élément supraconducteur 11 connecté à une extrémité du câble supraconducteur 1 et à un élément conducteur résistif 12 sortant de l'enceinte 8 à la température ambiante pour être connecté au réseau.

Cet élément supraconducteur 11 est préférentiellement constitué de rubans supraconducteurs dont la longueur est adaptée pour limiter la conduction thermique entre l'extrémité du câble 1 à la température du premier moyen de refroidissement et l'élément conducteur résistif 12 à la température du second moyen de refroidissement. Ces rubans supraconducteurs sont connectés à chaque extrémité à une pièce conductrice résistive par exemple en cuivre. Ces pièces conductrices sont respectivement connectées électriquement au câble supraconducteur 1 et à l'élément conducteur résistif 12.

L'élément supraconducteur 11 est connecté fermement, par son extrémité tournée vers l'élément conducteur résistif 12, à une première enveloppe cryogénique 14 métallique prolongeant le tube externe 3 du premier cryostat K1 et contenant le matériau d'isolation thermique de ce dernier et, par son extrémité opposée à l'élément conducteur résistif 12, à une seconde enveloppe cryogénique 13 métallique disposée à l'intérieur de ladite première enveloppe cryogénique 14, et dans laquelle est disposée l'extrémité du câble supraconducteur 1, prolongeant le tube interne 2 du premier cryostat K1 et contenant le premier moyen de refroidissement.

L'extrémité comporte un conduit d'entrée et de sortie 15 du premier matériau de refroidissement connecté à la seconde enveloppe cryogénique 13 et traversant la première enveloppe cryogénique 14 et l'enceinte 8. Ce conduit 15 est de préférence isolé électriquement par une partie de revêtement diélectrique 15A pour être connecté au système de refroidissement disposé à la terre.

L'extrémité comporte également un conduit d'entrée et de sortie 16 du second matériau de refroidissement traversant la pièce de cryostat intermédiaire 8E.

## Revendications

1. Extrémité d'un agencement comprenant un câble supraconducteur (1), un premier cryostat (K1) entourant ce dernier pour le passage d'un premier moyen de refroidissement et un second cryostat (K2) disposé autour de ce premier cryostat pour le passage d'un second moyen de refroidissement, chaque dit cryostat étant conformé de deux tubes métalliques (2, 3, 6, 7) coaxiaux et espacés, entre lesquels est disposé un matériau d'isolation thermique, le premier cryostat (K1) comportant sur sa face externe une couche diélectrique (4), revêtue d'un écran (5), extrémité **caractérisée en ce qu'**elle comporte une enceinte (8) prolongeant ledit second cryostat (K2) et comportant deux parois (8A, 8B, 8C, 8D) entre lesquelles est disposé un matériau d'isolation thermique, un agencement de déflexion de la tension (9) disposé sur ladite couche diélectrique (4) dans ledit second matériau de refroidissement contenu par ladite enceinte (8) et connecté à une extrémité dudit écran (5) et un conducteur de courant hybride comportant un élément supraconducteur (11) connecté à une extrémité dudit câble supraconducteur (1) et à un élément conducteur résistif (12) sortant de ladite enceinte (8).

2. Extrémité selon la revendication 1, **caractérisée en ce que** l'agencement de déflexion de la tension (9) est un cône de contrainte.

3. Extrémité selon la revendication précédente, **caractérisée en ce que** ledit cône de contrainte est en papier.

4. Extrémité selon l'une des revendications précédentes, **caractérisée en ce que** ledit élément supraconducteur (11) est disposé dans une première enveloppe cryogénique (14).

5. Extrémité selon la revendication précédente, **caractérisée en ce que** ladite première enveloppe cryogénique (14) prolonge le tube externe (3) dudit premier cryostat (K1) et contient ledit matériau d'isolation thermique de ce dernier.

6. Extrémité selon l'une des revendications précédentes, **caractérisée en ce que** ladite extrémité dudit câble supraconducteur (1) est disposée dans une seconde enveloppe cryogénique (13) disposée à l'intérieur de ladite première enveloppe cryogénique (14), prolongeant le tube interne (2) dudit premier cryostat (K1) et contenant ledit premier moyen de refroidissement.

7. Extrémité selon l'une des revendications précédentes, **caractérisée en ce que** ledit premier matériau de refroidissement est de l'hélium gazeux.

8. Extrémité selon l'une des revendications précédentes, **caractérisée en ce que** ledit second matériau de refroidissement est de l'azote liquide.

9. Extrémité selon l'une des revendications précédentes, **caractérisée en ce que** lesdits matériaux d'isolation thermique sont du vide ou une mousse isolante thermiquement.

## Patentansprüche

1. Ende einer Anordnung, umfassend ein Supraleiterkabel (1), einen ersten Kryostaten (K1), der dieses umgibt, um ein erstes Kältemittel durchfließen zu lassen, und einen zweiten Kryostaten (K2), der den ersten Kryostaten umgibt, um ein zweites Kältemittel durchfließen zu lassen, wobei jeder Krysotat aus zwei beabstandeten koaxialen Metallrohren (2, 3, 6, 7) besteht, zwischen denen ein wärmeisolierendes Material angeordnet ist, wobei der erste Kryostat (K1) auf seiner Außenfläche eine dielektrische Schicht (4) umfasst, die mit einem Schirm (5) beschichtet ist, wobei das Ende **dadurch gekennzeichnet ist, dass** es umfasst: eine Einschließung (8), die den zweiten Kryostaten (K2) verlängert und zwei Wände (8A, 8B, 8C, 8D) umfasst, zwischen denen ein wärmeisolierendes Material angeordnet ist, eine Spannungsablenkungsanordnung (9), die auf der dielektrischen Schicht (4) in dem in der Einschließung (8) enthaltenen zweiten Material angeordnet und mit einem Ende des Schirms (5) und einem hybriden Stromleiter verbunden ist, wobei der hybride Stromleiter ein Supraleiterelement (11) umfasst, das mit einem Ende des Supraleiterkabels (1) und einem aus der Einschließung (8) hinausführenden resistiven Leiterelement (12) verbunden ist.

2. Ende nach Anspruch 1, **dadurch gekennzeichnet, dass** die Spannungsablenkungsanordnung (9) ein Spannungskonus ist.

3. Ende nach dem vorstehenden Anspruch, **dadurch gekennzeichnet, dass** der Spannungskonus aus Papier besteht.

4. Ende nach einem der vorstehenden Ansprüche, **dadurch gekennzeichnet, dass** das Supraleiterelement (11) in einer ersten kryogenen Hülle (14) angeordnet ist.

5. Ende nach dem vorstehenden Anspruch, **dadurch gekennzeichnet, dass** die erste kryogene Hülle (14) das Außenrohr (3) des ersten Kryostaten (K1) verlängert und dessen wärmeisolierendes Material enthält.

6. Ende nach einem der vorstehenden Ansprüche, **dadurch gekennzeichnet, dass** das Ende des Supraleiterkabels (1) in einer zweiten kryogenen Hülle (13) angeordnet ist, die im inneren der ersten kryogenen Hülle (14) angeordnet ist, und das Innenrohr (2) des ersten Kryostaten (K1) verlängert und das erste Kältemittel enthält.

7. Ende nach einem der vorstehenden Ansprüche, **dadurch gekennzeichnet, dass** das erste Kältemittel gasförmiges Helium ist.

8. Ende nach einem der vorstehenden Ansprüche, **dadurch gekennzeichnet, dass** das zweite Kältemittel flüssiger Stickstoff ist.

9. Ende nach einem der vorstehenden Ansprüche, **dadurch gekennzeichnet, dass** es sich bei den wärmeisolierenden Materialien um ein Vakuum oder einen wärmeisolierenden Schaum handelt.

## Claims

1. An end of an arrangement comprising a superconducting cable (1), a first cryostat (K1) surrounding the latter for the passage of a first cooling means and a second cryostat (K2) arranged around this first cryostat for the passage of a second cooling means, each said cryostat being configured with two coaxial and spaced apart metal tubes (2, 3, 6, 7), between which a thermal insulating material is arranged, the first cryostat (K1) including, on its outer face, a dielectric layer (4), lined with a screen (5), the end being **characterized in that** it includes an enclosure (8) extending said second cryostat (K2) and including two walls (8A, 8B, 8C, 8D) between which a thermally insulating material is arranged, an arrangement for deflecting voltage (9) arranged on said dielectric layer (4) in said second cooling material contained by said enclosure (8) and connected to an end of said screen (5) and a hybrid current conductor including a superconducting element (11) connected to one end of said superconducting cable (1) and to a resistive conducting element (12) leaving said enclosure (8).

2. The end according to claim 1, **characterized in that** the voltage deflecting arrangement (9) is a stress cone.

3. The end according to the preceding claim, **characterized in that** said stress cone is made from paper.

4. The end according to one of the preceding claims, **characterized in that** said superconducting element (11) is arranged in a first cryogenic enclosure (14).

5. The end according to the preceding claim, **characterized in that** said first cryogenic enclosure (14) extends the outer tube (3) of said first cryostat (K1) and contains said thermally insulating material of the latter.

6. The end according to one of the preceding claims, **characterized in that** said end of said superconducting cable (1) is arranged in a second cryogenic enclosure (13) arranged inside said first cryogenic enclosure (14), extending the inner tube (2) of said first cryostat (K1) and containing said first cooling means.

7. The end according to one of the preceding claims, **characterized in that** said first cooling material is gaseous helium.

8. The end according to one of the preceding claims, **characterized in that** said second cooling material is liquid nitrogen.

9. The end according to one of the preceding claims, **characterized in that** said thermally insulating materials are vacuum or a thermally insulating foam.
